# EUROPÄISCHE PATENTANMELDUNG

(11) **EP 3 795 863 A1**
(43) Veröffentlichungstag der Anmeldung: **24.03.2021**
(21) Anmeldenummer: 19197771.9
(22) Anmeldetag: 17.09.2019
(51) Int. Cl.: F16H 57/033, F16H 57/08

(54) **BAUREIHE VON PLANETENGETRIEBEN, WINDKRAFTANLAGE, INDUSTRIE-APPLIKATION UND VERWENDUNG VON WÄLZLAGERN**

(71) Anmelder: Flender GmbH, 46395 Bocholt (DE)
(72) Erfinder: Daners, Dominikus, 45701 Herten (DE); Gettler, Ralf, 46325 Borken (DE); Holweger, Dirk, 90478 Nürnberg (DE)
(74) Vertreter: Maier, Daniel Oliver

(57) **Zusammenfassung**

Die Erfindung betrifft eine Baureihe (50) von Planetengetrieben (10), die eine Mehrzahl an Teilbaureihen (51, 52, 53, 54) von Planetengetrieben (10) umfasst. Jede Teilbaureihe (51, 52, 53, 54) weist zumindest einen Planetenradträger (12) auf, in dem mindestens ein Planetenrad (14) auf mindestens zwei Wälzlagern (20) gelagert ist. Erfindungsgemäß weisen die mindestens zwei Wälzlager (20) bei einer ersten Teilbaureihe (51) durchgehend eine erste Lagerbreite (24) auf. Ferner weisen die Wälzlager (20) einer zweiten Teilbaureihe (52) durchgehend eine zweite Lagerbreite (26) auf. Die Erfindung betrifft auch eine Windkraftanlage (60) mit einem Antriebsstrang (67), der über ein Planetengetriebe (10) aus einer entsprechenden Baureihe (50) verfügt. Ebenso betrifft die Erfindung eine Industrie-Applikation (90), die mit einem Planetengetriebe (10) aus einer erfindungsgemäßen Baureihe (50) ausgestattet ist. Ferner betrifft die Erfindung die Verwendung von einreihigen Wälzlagern (20) in Planetengetrieben (10), die zur Lagerung von Planetenrädern (14) dienen, den gleichen Außendurchmesser (22, 23) und die gleiche Lagerbreite (24, 26, 27, 29) aufweisen. Dabei werden je Planetenrad (14) mindestens zwei Wälzlager (20) kombiniert.

## Beschreibung

Die Erfindung betrifft eine Baureihe von Planetengetrieben, die zur Verwendung in Windkraftanlagen oder Industrie-Applikationen geeignet sind. Die Erfindung betrifft auch einen Antriebsstrang für eine Windkraftanlage mit einem Planetengetriebe aus einer solchen Baureihe und eine entsprechend ausgestattete Windkraftanlage. Ebenso betrifft die Erfindung eine Industrie-Applikation, die mit einem entsprechenden Planetengetriebe ausgerüstet ist. Ferner betrifft die Erfindung die Verwendung von Wälzlagern in Planetengetrieben.

Aus der Druckschrift WO 2018/141715 A1 ist eine Getriebebaureihe bekannt, die eine Mehrzahl an unterschiedlichen mehrstufigen Planetengetrieben umfasst. Für eine Mehrzahl an Planetengetrieben werden in einer Planetenstufe baugleiche Planetenträger eingesetzt. Dabei werden für unterschiedliche Planetengetriebe bei baugleichen Planetenträgern unterschiedlich breite Planetenräder eingesetzt.

DE 36 07 729 A1 offenbart eine Wälzlagerung, die für Arbeitswalzen in Hochgeschwindigkeitswalzwerken eingesetzt wird. Die Wälzlagerung umfasst zwei einreihige Zylinderrollenlager, zwischen denen ein Schrägwalzlager angeordnet ist.

Die Offenlegungsschrift WO 2009/059585 A2 zeigt eine Anordnung zur Lagerung eines Planetenrads in einem Planetengetriebe, bei der auf einem Innenring axial hintereinander mindestens drei Wälzkörper angeordnet sind. Auf den axial hintereinander angeordneten Wälzkörpern ist dabei das Planetenrad angeordnet.

Aus der Patentschrift EP 3 351 830 B1 ist ein mehrstufiges Planetengetriebe bekannt, in dem in den beiden Planetenstufen jeweils ein Planetenradträger angeordnet ist. An den Planetenradträgern sind jeweils mehrere Planetenräder drehbar angeordnet. Die Planetenräder sind auf den Planetenradbolzen auf mehreren hintereinander angeordneten Planetenradlagern angeordnet. Dabei sind die Planetenradlager als Gleitlager ausgebildet.

In unterschiedlichen technischen Gebieten werden Planetengetriebe eingesetzt, an die steigende Anforderungen in puncto Leistungsfähigkeit und Wirtschaftlichkeit gestellt werden. Es besteht deshalb ein Bedarf an belastbaren Planetengetrieben, die in einfacher und kosteneffizienter Weise herstellbar sind. Der Erfindung liegt die Aufgabenstellung zugrunde, eine Möglichkeit bereitzustellen, die dargelegten Anforderungen in vorteilhafter Weise zu erfüllen.

Die Aufgabenstellung wird durch die erfindungsgemäße Baureihe an Planetengetrieben erfüllt, die eine Mehrzahl an Teilbaureihen von Planetengetrieben umfasst, die jeweils mehrere Typen aufweisen. Unter einer Baureihe ist dabei eine Mehrzahl an Planetengetrieben zu verstehen, die dem gleichen Verwendungszweck dienen und/oder auf einem gleichen konstruktiven Grundkonzept basieren. Beispielsweise kann eine Baureihe eine Mehrzahl an Getrieben für Windkraftanlagen sein, die in unterschiedlichen Größen ausgebildet sind. Jede Teilbaureihe umfasst einen Planetenradträger, an dem zumindest ein Planetenrad drehbar gelagert ist. Dementsprechend verfügt der Planetenradträger über zumindest einen Planetenradbolzen. Ferner ist bei jeder Teilbaureihe das zumindest eine Planetenrad auf mindestens zwei Wälzlagern gelagert. Die Wälzlager können dazu als Kugellager, Zylinderrollenlager, Nadellager, Kegelrollenlager oder ähnlichem ausgebildet sein. Die mindestens zwei Wälzlager, auf denen das Planetenrad angebracht ist, sind axial hintereinander angeordnet. Der Begriff "axial" bezieht sich dabei auf eine Richtung entlang einer Planetenraddrehachse.

Erfindungsgemäß weisen die mindestens zwei Wälzlager bei einer ersten Teilbaureihe von Planetengetriebe durchgehend eine erste Lagerbreite auf. Korrespondierend weisen die zwei mindestens zwei Wälzlager bei einer zweiten Teilbaureihe von Planetengetriebe durchgehend eine zweite Lagerbreite auf. Durch ein Kombinieren von Wälzlagern mit gleicher Lagerbreite kann für das Planetenrad eine angestrebte Gesamtlagerbreite eingestellt werden, die ein optimiertes Tragen des Planetenrads ermöglicht. Durch die Verwendung von Wälzlagern mit gleicher Lagerbreite wird die Bauteilvielfalt in der erfindungsgemäßen Baureihe reduziert. Infolgedessen wird das Prinzip einer Gleichteileverwendung verwirklicht, was eine besonders einfache, schnelle und kosteneffiziente Herstellung verschiedener Teilbaureihen, und dementsprechend einer Vielzahl an Typen von Planetengetrieben erlaubt. Insbesondere kann so auch die konstruktive Auslegung von Lageranordnungen mit mehreren Wälzlagern vereinfacht werden und eine breite Spanne an Zusammenstellungen von Wälzlagern schnell ausgelegt werden. Durch eine Zusammenstellung von zwei oder mehr Wälzlagern können nahezu beliebige Gesamtlagerbreiten verwirklicht werden. Dadurch, dass die erste und zweite Lagerbreite unterschiedlich sind, kann durch Wahl entsprechender Lagerbreiten zwischen einzelnen Typen an Planetengetrieben über die Teilbaureihen hinweg eine feinschrittige Abstufung erzeugt werden. Insbesondere kann so mit einer reduzierten Bauteilvielfalt ein Planetengetriebe an unterschiedlich hohe Beanspruchungen angepasst werden und gleichzeitig dessen Herstellung beschleunigt werden. Des Weiteren können, entlang einer Axialrichtung betrachtet, symmetrische Anordnungen von Wälzlagern erzielt werden.

In einer weiteren Ausführungsform der beanspruchten Baureihe von Planetengetrieben weisen die Wälzlager mit der ersten und zweiten Lagerbreite, also die Wälzlager in der ersten bzw. zweiten Teilbaureihe an Planetengetriebe, einen ersten Außendurchmesser auf. Ein solcher gemeinsamer Außendurchmesser ermöglicht es, die Wälzlager zur Lagerung eines Planetenrads mit einer Nabenbohrung mit konstantem Durchmesser zu verwenden. Dies erlaubt es, bei allen Teilbaureihen der Baureihe jeweils ein Planetenrad zu verwenden, bei dem besondere Anpassungen an der Nabe, insbesondere Stufenbohrungen, entbehrlich sind. Auch dadurch sind Planetengetriebe gemäß der beanspruchten Baureihe in einfacher Weise herstellbar.

Darüber hinaus kann in der beanspruchten Baureihe zwischen je zwei Wälzlagern ein Abstandselement angeordnet sein. Das Abstandselement kann beispielweise als Distanzring ausgebildet sein, der auf den Planetenradbolzen aufschiebbar ist. Durch das Abstandselement kann die Gesamtlagerbreite an den mindestens zwei Wälzlagern weiter eingestellt werden. Infolgedessen kann auch eine Abstützweite für das Planetenrad vergrößert werden. Zwei Wälzlager können derart positioniert werden, dass sie axial bündig mit einer Nabe des Planetenrads sind. In der beanspruchten Baureihe kann ein in puncto Axialbreite einheitliches Abstandselement verwendet werden. So wird in der Baureihe mit nur einem Bauteiltyp mehr die erzielbare Anzahl an möglichen Gesamtlagerbreiten erheblich gesteigert. Alternativ kann die Baureihe auch Teilbaureihen bzw. Typen von Planetengetrieben umfassen, die Abstandselemente mit unterschiedlichen Axialbreiten aufweisen. Dementsprechend kann die beanspruchte Baureihe in einfacher Weise an neue konstruktive Erfordernisse angepasst werden.

Des Weiteren können die Wälzlager einreihig ausgebildet sein. Einreihige Wälzlager weisen eine reduzierte Lagerbreite auf, so dass bei der beanspruchten Baureihe stets mindestens zwei Wälzlager an einem Planetenrad einzusetzen sind. Dementsprechend können an einem Planetenrad auch mehr als zwei Wälzlager eingesetzt werden und so feinschrittig erhöhte Gesamtlagerbreiten erzielt werden. Dadurch wird für die Wälzlager des Planetenrads im Wesentlichen ein Baukastenprinzip verwirklicht. Dementsprechend werden von gleichen Wälzlagern in der beanspruchten Baureihe erhöhte Stückzahlen benötigt, was wiederum bei der Beschaffung einen Skaleneffekt ermöglicht. Dadurch wird die Wirtschaftlichkeit der beanspruchten Baureihe weiter gesteigert. Darüber hinaus sind einreihige Wälzlager einfach in der Auslegung berechenbar, was einen Ausbau der Baureihe auf erhöhte Anzahlen an Wälzlagern vereinfacht.

Alternativ können die Wälzlager auch mehrreihig oder ausgebildet sein.

Ferner kann in der beanspruchten Baureihe von Planetengetrieben die zweite Lagerbreite im Wesentlichen dem 1,1-fachen bis 1,5-fachen der ersten Lagerbreite entsprechen. Besonders bevorzugt kann die zweite Lagerbreite im Wesentlichen dem 1,3-fachen bis 1,4-fachen der ersten Lagerbreite entsprechen. Eine solche Zusammenstellung an Lagerbreiten erlaubt es, durch jeweiliges Kombinieren gleicher Wälzlager in den Teilbaureihen in der Baureihe eine feinschrittige Abstufung an Gesamtlagerbreiten zu erzielen. In der ersten Teilbaureihe sind so ganzzahlige Vielfache der ersten Lagerbreite als Gesamtbreite einstellbar. Bei einer entsprechenden zweiten Lagerbreite können für die erste Teilbaureihe so Typen bereitgestellt werden, die im Hinblick auf die erste Teilbaureihe Zwischengrößen aufweisen. Hierdurch wird mit einem Minimum an unterschiedlichen Bauteilen ein breites Spektrum am möglichen Gesamtlagerbreiten bereitgestellt.

In der beanspruchten Baureihe an Planetengetrieben kann das Abstandselement, das zwischen zwei Wälzlagern positionierbar ist, eine Axiallänge aufweisen, die im Wesentlichen dem 0,1-fachen bis 0,2-fachen entspricht. Unter der Axiallänge ist dabei die Abmessung des Abstandselements zu verstehen, durch die der Abstand zwischen zwei Wälzlagern festgelegt wird, wenn das Abstandselement dort positioniert wird. Bei einem ringförmigen Abstandselement ist die beispielsweise die Ringdicke. Durch eine Axiallänge, die dem 0,1-fachen bis 0,2-fachen der ersten Axialbreite entspricht, können innerhalb der ersten und zweiten Teilbaureihe weitere Zwischengrößen definiert werden. Infolgedessen wird durch Hinzuziehen von lediglich einem weiteren Bauteiltyp die Vielfalt an möglichen Zusammenstellungen von Wälzlagern in den Teilbaureihen weiter gesteigert.

In einer weiteren Ausführungsform der beanspruchten Baureihe kann diese auch Teilbaureihen umfassen, in der die Wälzlager einen zweiten Außendurchmesser aufweisen, der vom ersten Außendurchmesser abweicht. In einer dritten Teilbaureihe weisen die Wälzlager durchgehend eine dritte Lagerbreite auf. In einer vierten Teilbaureihe weisen die Wälzlager analog durchgehend eine vierte Lagerbreite auf. Das Prinzip der beanspruchten Baureihe, das in der ersten und zweiten Teilbaureihe verwirklicht wird, ist in einfacher Weise auch auf Teilbaureihen mit unterschiedlichen Außendurchmessern übertragbar. Damit ist die beanspruchte Baureihe ohne Weiteres skalierbar, was eine Vereinfachung einer breiten Spanne von Planetengetrieben erlaubt. Dadurch wird eine Möglichkeit bereitgestellt die Herstellung von Planetengetrieben kosteneffizienter zu gestalten.

In einer Weiterbildung der beanspruchten Lösung können die Wälzkörper mit dem ersten und dem zweiten Außendurchmesser Wälzkörper aufweisen, die den gleichen Wälzkörperdurchmesser aufweisen. Alternativ oder ergänzend können die Wälzkörper in den Wälzlagern mit dem ersten und zweiten Außendurchmesser die gleiche Wälzkörperlänge, also gleichen Abmessungen in Axialrichtung, aufweisen. Dies ermöglicht eine weitere Vereinheitlichung in der Herstellung von Wälzkörpern an den in der beanspruchten Baureihe eingesetzten Wälzlagern. Das Prinzip der Gleichteileverwendung wird somit nicht nur in der Zusammenstellung von Wälzlagern, sondern auch in der Herstellung der Wälzlager selbst verwirklicht. Insbesondere können bei gleichen Wälzkörperdurchmessern und Wälzkörperlängen identische Wälzkörper in den Wälzlagern mehrerer Teilbaureihen verwendet werden.

Des Weiteren können die Wälzlager mit der ersten und der zweiten Lagerbreite die gleiche Anzahl an Wälzkörpern aufweisen, Wälzkörper mit gleichen Wälzkörperdurchmessern und/oder den gleichen Teilkreisdurchmesser aufweisen. Auch hierdurch wird die Herstellung an Wälzkörpern für die unterschiedlichen Wälzlager weiter vereinheitlicht, und somit wirtschaftlicher gestaltet. Insbesondere wird so die konstruktive Auslegung der Wälzlager vereinfacht und somit beschleunigt. Beispielweise können so Wälzlager mit der ersten und zweiten Lagerbreite hergestellt werden, die auf derselben Konstruktion basieren und sich lediglich durch ihre Lagerbreite unterscheiden.

Ferner können in der beanspruchten Baureihe die erste Lagerbreite, wie in der ersten Teilbaureihe eingesetzt, und die dritte Lagerbreite, wie in der dritten Teilbaureihe eingesetzt, gleich sein. Alternativ oder ergänzend können die zweite Lagerbreite, wie in der zweiten Teilbaureihe eingesetzt, und die vierte Lagerbreite, wie in der vierten Teilbaureihe eingesetzt, gleich sein. Infolgedessen können die vorhandenen Lagerbreite über mehrere Teilbaureihe hinweg einander entsprechen. Eine angestrebte Gesamtlagerbreite kann dadurch mittels einer analogen Zusammenstellung von Wälzlagern in Teilbaureihen mit unterschiedlichem Außendurchmesser eingestellt werden. Dies vereinfacht die Handhabung der beanspruchten Baureihe weiter. Insbesondere genügt die Kenntnis beispielweise über eine Reihenfolge von Zusammenstellungen von Wälzlagern und eventuell Abstandselementen eines einzigen Außendurchmessers in steigender Gesamtlagerbreite um die gleiche Vielfalt an möglichen Gesamtlagerbreiten mit Wälzlagern mit einem beliebigen Außendurchmesser zusammenzustellen. Die beanspruchte Baureihe weist deshalb in der Handhabung eine reduzierte Fehleranfälligkeit auf, was die Herstellung der entsprechenden Planetengetriebe weiter beschleunigt und prozesssicherer macht.

Ferner können in der beanspruchten Baureihe auch Abstandselemente mit unterschiedlichen Axiallängen eingesetzt werden und so eine weiter gesteigerte Anzahl an möglichen Gesamtlagerbreiten eingestellt werden. Abstandselemente wie beispielsweise Ringe sind in einfacher Weise herstellbar und anpassbar. Die skizzierte Vielfalt an möglichen Gesamtbreiten wird infolgedessen besonders wirtschaftlich erzielt. Alternativ oder ergänzend können zwischen zwei Wälzlagern auch mehrere Abstandselemente mit gleicher oder unterschiedlicher Axiallänge positioniert werden. Die oben skizzierten Vorteile der beanspruchten Lösung werden so in gesteigertem Umfang verwirklicht.

In einer weiteren Ausführungsform der beanspruchten Baureihe der Planetenträger einer ersten Planetenstufe mit Wälzlagern im Sinne der beanspruchten Baureihe ausgestattet. Ferner kann auch eine zweite Planetenstufe des Planetengetriebes, die nach der ersten Planetenstufe angeordnet ist, mit Wälzlagern für die Planetenräder ausgestattet sein, die in Anordnungen gemäß einer der oben beschriebenen Ausführungsformen ausgebildet sind. Das Prinzip der skizzierten Baureihe kann in einfacher Weise bei mehrstufigen Planetengetrieben auf jeder der Planetenstufen übertragen werden. Dadurch wird die Herstellung besonders aufwendiger Planetengetriebe mit mehreren Stufen, und im Stand der Technik dementsprechend hohe Bauteilvielfalt, weiter vereinfacht.

Die oben beschriebene Aufgabenstellung wird auch durch einen erfindungsgemäßen Antriebsstrang für eine Windkraftanlage gelöst. Der Antriebsstrang umfasst eine Rotorwelle, die mit einem Rotor einer Windkraftanlage koppelbar ist. Der Antriebsstrang umfasst auch ein Getriebe, das mit der Rotorwelle drehmomentübertragend verbunden ist. Das Getriebe ist wiederum drehmomentübertragend mit einem Generator gekoppelt, der auch zum Antriebsstrang gehört. Erfindungsgemäß ist das Getriebe im Antriebsstrang als Planetengetriebe ausgebildet. Das Planetengetriebe ist dabei ein Planetengetriebe aus einer Baureihe gemäß der oben skizzierten Ausführungsformen. Die Ausführungsformen der beanspruchten Baureihe erlaubt es, Planetengetriebe in einfacher und kosteneffizienter Weise bereitzustellen. Dabei sind die Planetengetriebe beispielsweise an unterschiedliche Rotorwellendrehmomente und/oder Generatoreingangsdrehzahlen durch entsprechende Auswahl aus der Baureihe anpassbar. Mittels der beanspruchten Baureihe an Planetengetrieben werden flexible Zusammenstellungen unterschiedlicher Generatoren und unterschiedlichen Rotorwellendrehmomenten ermöglicht. Der beanspruchte Antriebsstrang ist folglich an eine Vielzahl von Windkraftanlagen schnell und wirtschaftlich anpassbar.

Gleichermaßen wird die skizzierte Aufgabenstellung durch eine erfindungsgemäße Windkraftanlage gelöst. Die Windkraftanlage umfasst einen Rotor, der drehbar an einer Gondel angebracht ist. Der Rotor ist im montierten Zustand mit einer Rotorwelle verbunden, die zu einem Antriebsstrang gehört. Der Antriebsstrang ist in der Gondel aufgenommen und dazu ausgebildet, aus einer Drehung des Rotors Elektrizität zu gewinnen. Erfindungsgemäß ist der Antriebsstrang gemäß einer der oben dargestellten Ausführungsformen ausgebildet. Der erfindungsgemäße Antriebsstrang erlaubt somit, die technischen Vorteile der oben beschriebenen Baureihe an Planetengetrieben in Windkraftanlagen zu nutzen.

Ebenso wird die dargestellte Aufgabenstellung durch eine erfindungsgemäße Industrie-Applikation gelöst. Die Industrie-Applikation umfasst eine Antriebseinheit, die beispielsweise als Elektromotor, Verbrennungsmotor oder Hydraulikmotor ausgebildet sein kann. Die Antriebseinheit stellt eine Antriebsleistung zur Verfügung, die über eine drehmomentübertragende Verbindung an ein Getriebe weitergegeben wird. Das Getriebe ist wiederum drehmomentübertragend mit einer Abtriebseinheit verbunden, für die die Antriebsleistung zur Verfügung gestellt wird. Die Abtriebseinheit kann als mechanische Anwendung ausgebildet sein, beispielsweise als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ausgebildet sein. Erfindungsgemäß kann das Getriebe als Planetengetriebe aus einer Baureihe nach einer der oben skizzierten Ausführungsformen ausgebildet sein. Die technischen Vorteile der erfindungsgemäßen Baureihe werden bei Anwendung in einer Industrie-Applikation in besonderem Umfang erzielt.

Die skizzierte Aufgabenstellung wird auch durch die erfindungsgemäße Verwendung von Wälzlagern gelöst. Die Wälzlager werden in einem Planetengetriebe zur drehbaren Lagerung von Planetenrädern in einem Planetengetriebe eingesetzt. Erfindungsgemäß sind die Wälzlager einreihig ausgebildet und werden je Planetenrad kombiniert, also nicht einzeln, zur Lagerung des jeweiligen Planetenrads verwendet. Die Wälzlager weisen den gleichen Außendurchmesser auf und haben auch durchgehend die gleiche Lagerbreite. Damit werden im Wesentlichen gegenseitig austauschbare Wälzlager eingesetzt. Je Planetenrad werden mindestens zwei Wälzlager eingesetzt, um so modular eine angestrebte Gesamtlagerbreite am Planetenrad zu erzielen. Dadurch kann für das Planetenrad in einfacher und wirtschaftlicher Weise eine angepasste Anordnung von Wälzlagern bereitgestellt werden.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch einen Längsschnitt eines Planetengetriebes aus einer Baureihe gemäß einer ersten Ausführungsform der erfindungsgemäßen Baureihe;
- FIG 2: schematisch eine Übersicht über die erste Ausführungsform der erfindungsgemäßen Baureihe von Planetengetrieben;
- FIG 3: schematisch eine Übersicht über eine zweite Ausführungsform der erfindungsgemäßen Baureihe von Planetengetrieben;
- FIG 4: einen Aufbau von Wälzlagern gemäß einer dritten Ausführungsform der erfindungsgemäßen Baureihe von Planetengetrieben;
- FIG 5: einen Aufbau von Wälzlagern gemäß einer vierten Ausführungsform der erfindungsgemäßen Baureihe von Planetengetrieben;
- FIG 6: eine geschnittene Schrägansicht einer Ausführungsform der erfindungsgemäßen Windkraftanlage;
- FIG 7: einen schematischen Aufbau einer Ausführungsform der erfindungsgemäßen Industrie-Applikation.

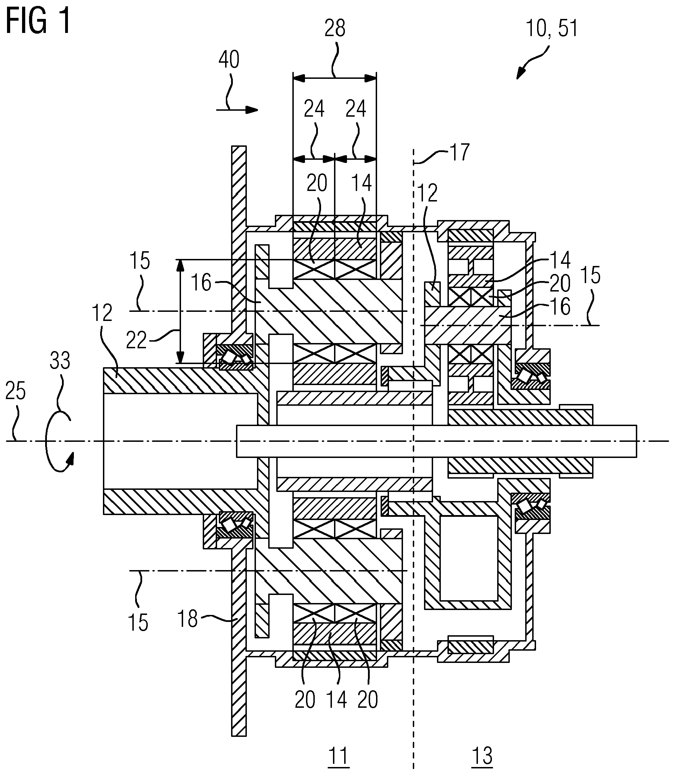

In FIG 1 ist schematisch ein Längsschnitt eines Planetengetriebes 10 mit einer ersten und einer zweiten Planetenstufe 11, 13 dargestellt. Die Trennung zwischen der ersten und zweiten Planetenstufe 11, 13 ist durch die Trennlinie 17 abgebildet. Das Planetengetriebe 10 gehört zu einer Baureihe 50 von Planetengetrieben 10. Die Baureihe 50 ist dabei gemäß einer ersten Ausführungsform der vorliegenden Erfindung ausgebildet. Innerhalb der Baureihe 50 gehört das Planetengetriebe 10 nach FIG 1 zu einer ersten Teilbaureihe 51. Die Planetenstufen 11, 13 weisen jeweils einen Planetenradträger 12 auf, der um eine Hauptdrehachse 25 des Planetengetriebes 10 drehbar ist. Über den Planetenradträger 12 der ersten Planetenstufe 11 wird Antriebsleistung 33 zugeführt. Der Planetenträger 12 der ersten Planetenstufe 11 weist eine Mehrzahl an Planetenradbolzen 16 auf, auf denen jeweils ein Planetenrad 14 um eine Planetenradachse 15 drehbar angeordnet ist. Analog sind auch Planetenräder 14 auf Planetenradbolzen 16 des Planetenradträgers 12 der zweiten Planetenstufe 13 angebracht. Die Planetenräder 14 in der ersten und zweiten Planetenstufe 11, 13 sind jeweils auf zwei axial hintereinander angeordneten Wälzlagern 20 angeordnet. Eine Axialrichtung ist in FIG 1 durch den Pfeil 40 angedeutet. Die Wälzlager 20 am Planetenträger 12 der ersten Planetenstufe 11 weisen beide einen ersten Außendurchmesser 22 auf, durch den das Planetenrad 14 bei einer Montage in einfacher Weise auf die Wälzlager 20 aufgeschoben werden kann. Ferner haben die Wälzlager 20 auf dem Planetenträger 12 der ersten Planetenstufe 11 jeweils eine erste Lagerbreite 24. Durch die Anordnung der Wälzlager 20 ergibt sich an einem Planetenradbolzen 16 eine Gesamtlagerbreite 28, die zweimal der ersten Lagerbreite 24 entspricht. Die Wälzlager 20 an den Planetenradbolzen 16 der ersten Planetenstufe 11 sind einreihig ausgebildet und im Wesentlichen baugleich, also gegeneinander austauschbar. Die Planetenräder 14 in der ersten Planetenstufe 11 sind somit auf einer Vielzahl an baugleichen, oder zumindest typengleichen, Wälzlagern 20 aufgenommen. Dadurch wird das Prinzip der Gleichteileverwendung verwirklicht.

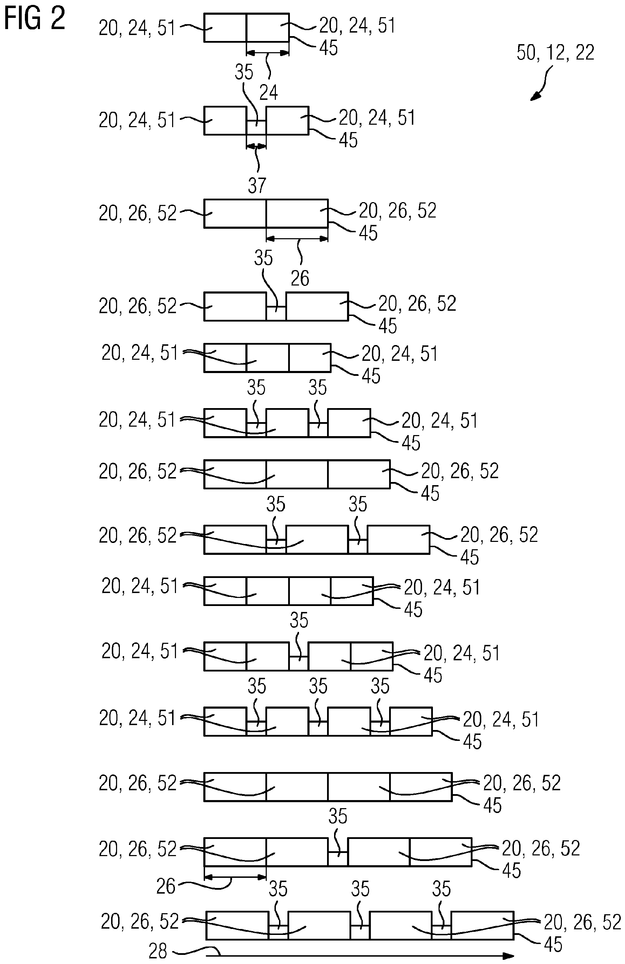

Eine schematische Übersicht über die Baureihe 50 gemäß der ersten Ausführungsform der Erfindung ist in FIG 2 abgebildet. Die Baureihe 50 umfasst eine Mehrzahl an Typen 45, die zu einer ersten oder einer zweiten Teilbaureihe 51, 52 gehören. Bei jedem Typ 45 liegt eine andere Zusammenstellung an Wälzlagern 20 und Abstandselementen 35 vor, die je Planetenradbolzen 16 in einem Planetenradträger 12 eingesetzt werden. Die Wälzlager 20 der Baureihe 50 gemäß FIG 2 weisen durchgehend einen ersten Außendurchmesser 22 auf. FIG 2 zeigt vertikal untereinander angeordnet für jeden Typ die Anordnung der Wälzlager 20 in einem Halbschnitt. In horizontaler Richtung ist die Gesamtlagerbreite 28 jeden Typs 45 dargestellt. Die erste Teilbaureihe 51 umfasst eine Mehrzahl an Typen 45, in denen jeweils mindestens zwei Wälzlager 20 mit der ersten Lagerbreite 24 eingesetzt werden. Zwischen Wälzlagern 20 mit der ersten Lagerbreite 24 sind in einigen Typen 45 Abstandselemente 35 angeordnet, die als Ringe ausgebildet sein können. Die Abstandselemente 35 weisen in den Typen 45 der ersten und zweiten Teilbaureihe 51, 52 jeweils die gleich Axialbreite 37 auf. Durch die Abstandselemente 35 kann die Gesamtlagerbreite 28, also die Summe an Lagerbreiten 24, 26 und Axialbreiten 37 von Abstandselementen 35 für jeden Typ 45 eingestellt werden.

Bei den Typen 45 der zweiten Teilbaureihe 52 werden Wälzlager 20 verwendet, die durchgehend eine zweite Lagerbreite 26 aufweisen. Analog der ersten Teilbaureihe 51 weisen einige Typen 45 der zweiten Teilbaureihe 52 Abstandselemente 35 auf, die zwischen den Wälzlagern 20 angeordnet sind. Die zweite Lagerbreite 26 entspricht dabei dem 1,2-fachen der ersten Lagerbreite 24. Durch das Zusammenspiel der ersten und zweiten Lagerbreite 24, 26 und den Abstandselementen 35 ist eine Vielzahl an Typen 45 herstellbar. Die Baureihe 50 gemäß FIG 1 zeigt exemplarisch 14 Typen 45, die jeweils eine unterschiedliche Gesamtlagerbreite 28 aufweisen, dabei jedoch nur auf drei unterschiedlichen Bauteiltypen basieren. Dies erlaubt es in einfacher Weise, durch Kombinieren von baugleichen Wälzlagern 20 und je nach Typ 45 auch Abstandselementen 45. Hierdurch wird eine feinschrittig abgestufte Baureihe 50 von möglichen Anordnungen von Wälzlagern 20 bereitgestellt. Ein Planetenradträger 12 ist bei der dargestellten Baureihe 50 somit an unterschiedlich breite Planetenräder 14 anpassbar und bietet eine optimierte Tragzahl für diese. Gleichzeitig ist die einzelnen Typen 45 in einfacher Weise montierbar, so dass die Herstellung von Planetengetrieben 10 gemäß der Baureihe 50 prozesssicher abläuft. Durch das Prinzip der Gleichteileverwendung kann zusätzlich ein hohes Maß an Wirtschaftlichkeit erzielt werden.

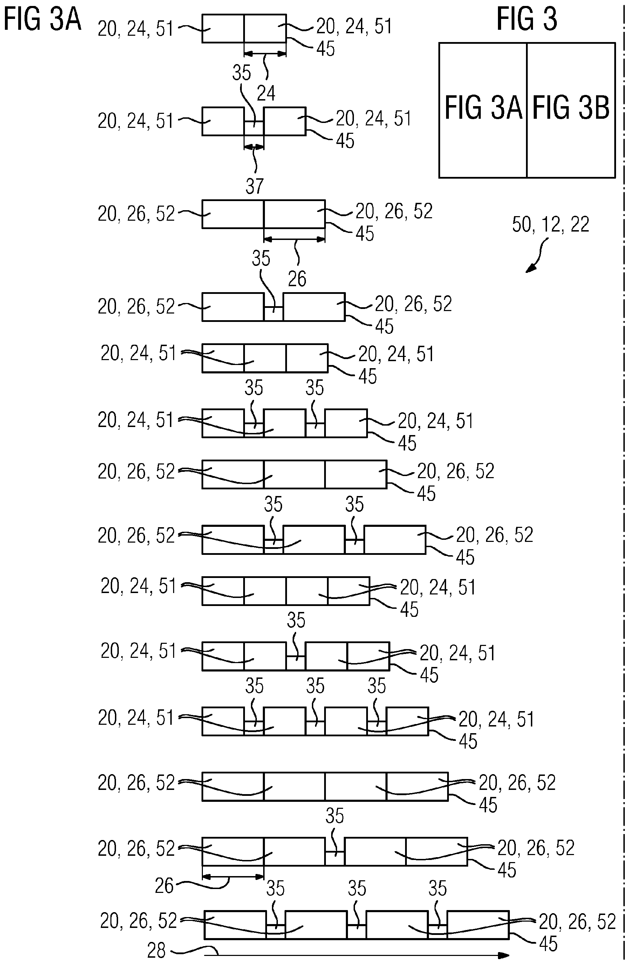

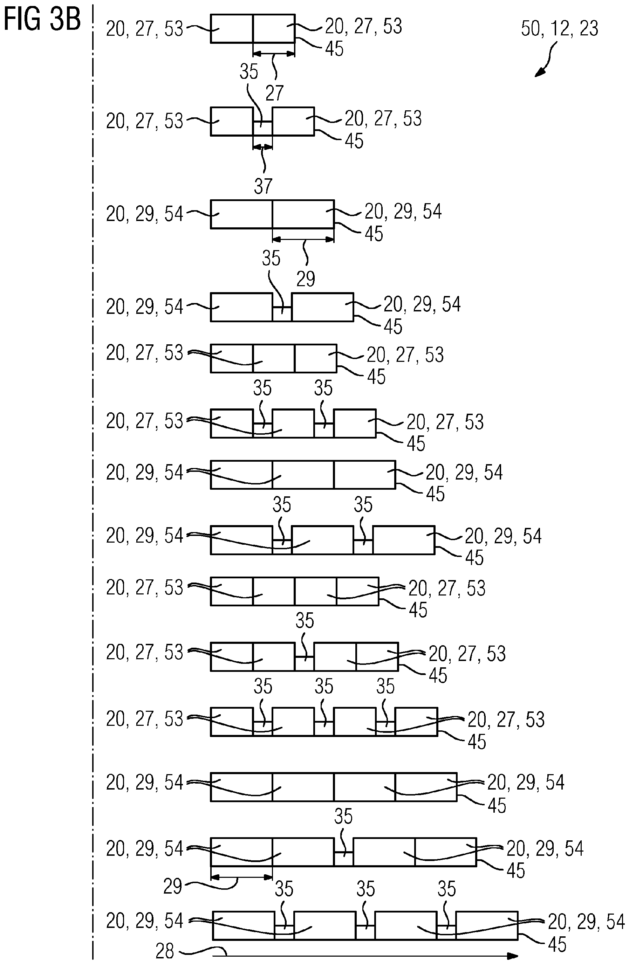

FIG 3 zeigt schematisch eine Übersicht über eine zweite Ausführungsform der beanspruchten Baureihe 50. Die Baureihe 50 weist, in FIG 3 links dargestellt, eine erste und eine zweite Teilbaureihe 51, 52 wie auch in FIG 2 abgebildet, auf. Des Weiteren umfasst die Baureihe 50 eine dritte und eine vierte Teilbaureihe 53, 54, die in FIG 3 rechts dargestellt ist. Die Wälzlager 20 der dritten und vierten Teilbaureihe 53, 54 weisen durchgehend eine dritte bzw. vierte Lagerbreite 37 auf. Die dritte und vierte Teilbaureihe 53, 54 weisen auch Typen 45 auf, bei denen zwischen Wälzlagern 20 Abstandselemente 35 angeordnet sind, die jeweils eine Axialbreite 37 aufweisen, die identisch ist mit der Axialbreite 37 der Abstandselemente 35, die auch in der ersten und zweiten Teilbaureihe verwendet werden. Dadurch in der ersten, zweite, dritten und vierten das Prinzip der Gleichteileverwendung verwirklicht. Darüber hinaus entspricht die dritte Lagerbreite 37 in der dritten Teilbaureihe 53 der ersten Lagerbreite 24 in der ersten Teilbaureihe 51. Die vierte Lagerbreite 29 in der vierten Teilbaureihe 54 entspricht der zweiten Lagerbreite 26 in der zweiten Teilbaureihe 52.

Die dritte und vierte Teilbaureihe 53, 54 heben sich von der ersten und zweiten Teilbaureihe 51, 52 in puncto Außendurchmesser ab. Die Wälzlager 20 der dritten und vierten Teilbaureihe 53, 54 weisen einen zweiten Außendurchmesser 23 auf, der sich von ersten Außendurchmesser 22 aus der ersten und zweiten Teilbaureihe 51, 52 unterscheidet. Dementsprechend weisen in FIG 3 horizontal gegenüberliegende Zusammenstellungen von Wälzkörpern 20 und gegebenenfalls Abstandselementen 35 die gleiche Gesamtlagerbreite 28 auf. Das Prinzip der ersten und zweiten Teilbaureihe 51, 52 ist somit in einfacher Weise auf unterschiedliche Außendurchmesser 22, 23 übertragbar. Anordnungen von Wälzlagern 20, 23 mit unterschiedlichen Außendurchmessern 22, 23 können auf eine angestrebte Gesamtlagerbreite 28 hin nach einer einheitlichen Systematik zusammengestellt werden. Durch den erhöhten Grad an Gleichteileverwendung kann mit einem Minimum an Bauteilvielfalt eine erhöhte Anzahl an möglichen Anordnungen von Wälzlagern 20 für Planetengetriebe 10 kosteneffizient bereitgestellt werden. Infolge der reduzierten Bauteilvielfalt weist die Baureihe 50 nach FIG 3 bei der Montage eine reduzierte Fehleranfälligkeit auf und ist deshalb zuverlässig in einen Produktionsablauf integrierbar. Das Prinzip nach FIG 3 kann ohne Weitere auf weitere Teilbaureihen übertragen werden.

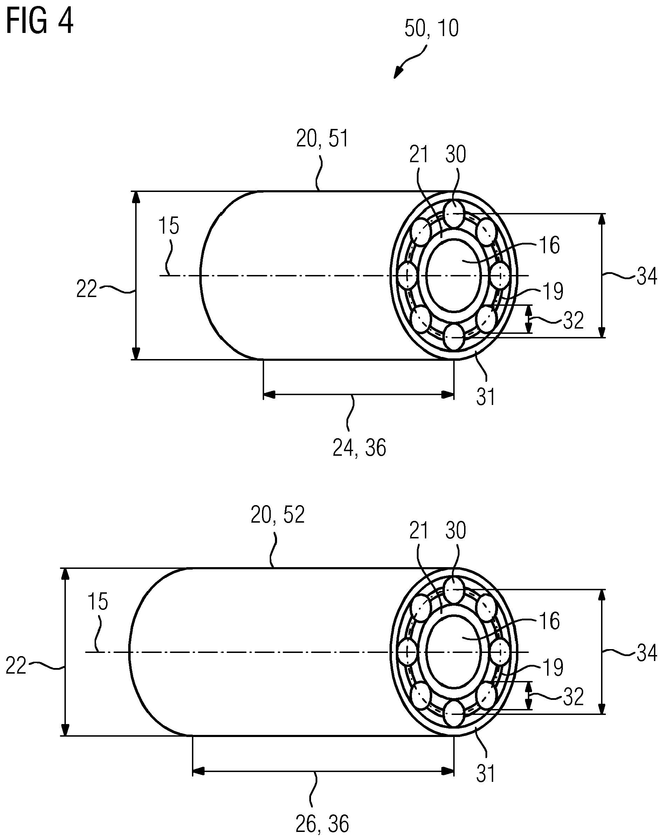

In FIG 4 ist der Aufbau von Wälzlagern 20 dargestellt, die in einer ersten und einer zweiten Teilbaureihe 51, 52 gemäß einer dritten Ausführungsform der beanspruchten Baureihe 50 ausgebildet sind. Die Wälzlagern 20 werden dabei in Planetengetrieben 10, wie beispielsweise in FIG 1 gezeigt, eingesetzt. Die Wälzlager 20 umfassen jeweils einen Innenring 21 und einen Außenring 31, die um eine Planetenradachse 15 relativ zueinander drehbar sind. Ferner umfassen die Wälzlager 20 Käfige 19. Die Innenringe 21 sind derart ausgebildet, dass sie auf einer nicht näher dargestellten Planetenradachse 16 angebracht werden können. Zwischen dem Außenring 31 und dem Innenring 16 sind Wälzkörper 30 angeordnet, die als Zylinderrollen oder Nadeln ausgebildet sind. Die Wälzkörper 30 weisen dementsprechend eine Wälzkörperlänge 36 auf, die im Wesentlichen der ersten bzw. zweiten Lagerbreite 24, 26 entspricht. Die Wälzlager 20 der ersten Teilbaureihe 51 weisen eine erste und die Wälzlager 20 der zweiten Teilbaureihe 52 eine zweite Lagerbreite 26 auf. Ferner weisen die Wälzlager 20 der ersten und zweiten Teilbaureihe 51, 52 einen gemeinsamen ersten Außendurchmesser 22 auf. Die Wälzkörper 30 in den Wälzlagern 20 der ersten Teilbaureihe 51 weisen den gleichen Wälzkörperdurchmesser 32 auf wie die Wälzkörper 30 in den Wälzlagern 20 der zweiten Teilbaureihe 52. Des Weiteren entspricht die Anzahl an Wälzkörpern 30 in Wälzlagern 20 der ersten Teilbaureihe 51 der Anzahl an Wälzkörpern 30 in Wälzlagern 20 der zweiten Teilbaureihe 52. Ebenso weisen wie Wälzlager 20 der ersten und zweiten Teilbaureihe 51, 52 einen gemeinsamen, also den gleichen, Teilkreisdurchmesser 34 auf. Der Teilkreisdurchmesser 34 entspricht, bezogen auf die Planetenradachse 15, dem Durchmesser der Kreislinie, auf der die Mittelpunkte der Wälzköper 30 liegen. Die Wälzlager 20 der zweiten Teilbaureihe 52 können insgesamt als verlängerte Wälzlager 20 der ersten Teilbaureihe aufgefasst werden. Insgesamt können die Wälzlager 20 so in einfacher und kosteneffizienter Weise hergestellt werden.

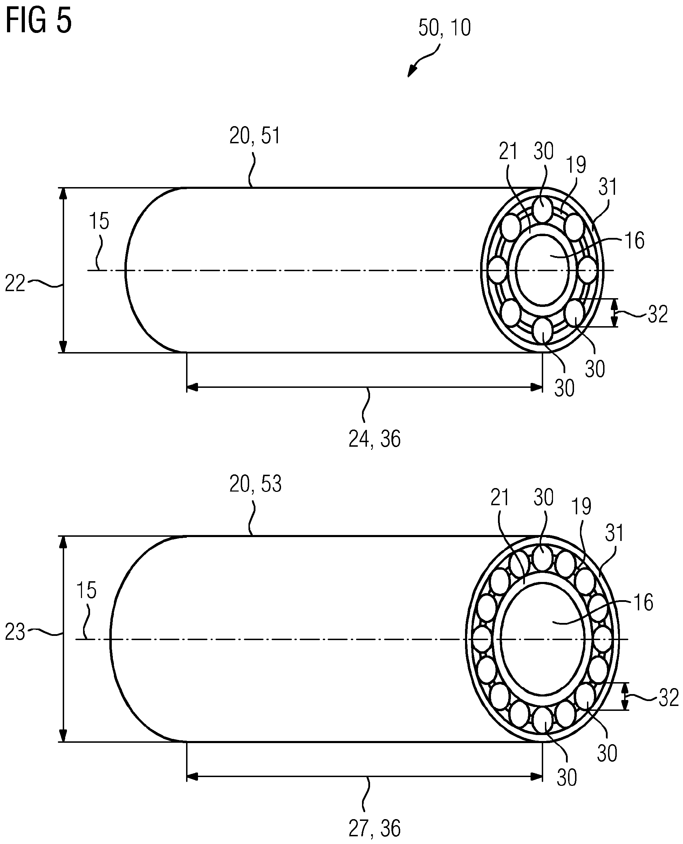

Des Weiteren zeigt FIG 5 Wälzlager 20, die zu einer vierten Ausführungsform der beanspruchten Baureihe 50 von Planetengetrieben 10 gehören. Die Wälzlager 20 gehören zu einer ersten und dritten Teilbaureihe 51, 53. Die Wälzlager 20 weisen jeweils einen Innenring 21 und einen Außenring 31 auf, zwischen denen jeweils Wälzkörper 30 angeordnet sind. Der Innenring 21 und der Außenring 31 sind in den Wälzlagern 20 relativ zueinander um eine Planetenradachse 15 drehbar. Die Innenringe 21 sind derart ausgebildet, dass sie auf einem nicht näher abgebildeten Planetenradbolzen 16 anbringbar sind. Ferner umfassen die Wälzlager 20 Käfige 19.

Die Wälzlager 20 weisen eine erste bzw. dritte Lagerbreite 24, 27 auf, die gleich sind. Die Wälzlager 20 der ersten und dritten Teilbaureihe 51, 53 tragen somit in einer Anordnung von Wälzlagern 20 im gleichen Maß zur entsprechenden Gesamtlagerbreite 28 bei. Die erste bzw. dritte Lagerbreite 24, 27 entspricht im Wesentlichen einer Wälzkörperlänge 36 der Wälzkörper 30 in den Wälzlagern 20. Die Wälzkörperlängen 36 in der ersten und dritten Teilbaureihe 51, 53 sind dementsprechend gleich. Die Wälzkörper 30 sind als Zylinderrollen oder Nadeln ausgebildet und weisen in der ersten und dritten Teilbaureihe 51, 53 einen gleichen Wälzkörperdurchmesser 32 auf. Die Wälzlager 20 der ersten Teilbaureihe 51 weisen einen ersten Außendurchmesser 22 auf, der geringer ist als ein zweiter Außendurchmesser 23 der Wälzlager 20 aus der dritten Teilbaureihe 53. Dementsprechend verfügt das Wälzlager 20 der dritten Teilbaureihe 53 über eine höhere Anzahl an Wälzkörpern 30 als das in puncto Lagerbreite 24, 27 korrespondierende Wälzlager 20 der ersten Teilbaureihe 51. Die Wälzkörper 30 der ersten und dritten Teilbaureihe 53 sind dementsprechend gegeneinander austauschbar. Die Fertigung der Wälzlager 20 für die erste und zweite Teilbaureihe 51, 53 wird durch diese Anwendung des Prinzips der Gleichteileverwendung ebenfalls vereinfacht, was die Wirtschaftlichkeit der Baureihe 50 an Planetengetrieben 10 weiter steigert.

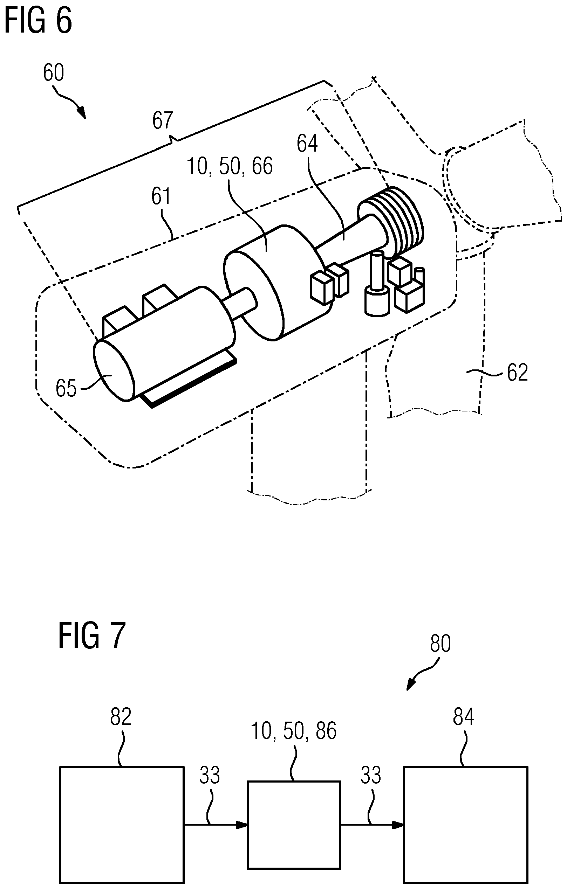

Ferner ist in FIG 6 eine Ausführungsform einer beanspruchten Windkraftanlage 60 dargestellt. Die Windkraftanlage 60 weist einen Rotor 62 auf, der an einer Gondel 61 drehbar angebracht ist. Der Rotor 62 ist mit einer Rotorwelle 64 verbunden, durch die über ein Getriebe 66 ein Generator 65 angetrieben wird. Die Rotorwelle 64, das Getriebe 10 und der Generator 65 gehören zu einem Antriebsstrang 67 der Windkraftanlage 60, der in der Gondel 61 aufgenommen ist. Das Getriebe 66 ist ein Planetengetriebe 10 aus einer Baureihe 50 gemäß einer der oben beschriebenen Ausführungsformen. Das Planetengetriebe 10 aus einer beanspruchten Baureihe 50 ist schnell und einfach herstellbar, wodurch wiederum die Wirtschaftlichkeit des Antriebsstrangs 67 und der Windkraftanlage 60 gesteigert wird.

FIG 7 zeigt schematisch den Aufbau einer beanspruchten Industrie-Applikation 80, die eine Antriebseinheit 82 und eine Abtriebseinheit 84 aufweist, die drehmomentübertragend über ein Getriebe 86 miteinander verbunden sind. Die Antriebseinheit 82 ist dazu ausgebildet, eine Antriebsleistung 33 bereitzustellen, die für den Betrieb der Abtriebseinheit 84 notwendig ist. Die Antriebseinheit 82 ist dazu beispielsweise als Elektromotor, als Verbrennungsmotor, oder als Hydraulikmotor ausgebildet. Die Abtriebseinheit 84 ist als mechanische Anwendung ausgebildet. Die Abtriebseinheit 84 ist dementsprechend ausgebildet, dass die Industrie-Applikation 80 beispielsweise eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ist. Das Getriebe 86 ist dabei als Planetengetriebe 10 aus einer Baureihe 50 gemäß einer der oben skizzierten Ausführungsformen ausgebildet. Die beanspruchte Baureihe 50 erlaubt es, geeignete Planetengetriebe 10 unterschiedlicher Leistungsklassen kosteneffizient und schnell herzustellen. Dadurch wird die Wirtschaftlichkeit der beanspruchten Industrie-Applikation 80 gesteigert.

## Patentansprüche

1. Baureihe (50) von Planetengetrieben (10), umfassend eine Mehrzahl an Teilbaureihen (51, 52, 53, 54) von Planetengetrieben (10), wobei jede Teilbaureihe (51, 52, 53, 54) zumindest einen Planetenradträger (12) aufweist, in dem mindestens ein Planetenrad (14) auf mindestens zwei Wälzlagern (20) gelagert ist, **dadurch gekennzeichnet, dass** die mindestens zwei Wälzlager (20) bei einer ersten Teilbaureihe (51) durchgehend eine erste Lagerbreite (24) aufweisen und bei einer zweiten Teilbaureihe (52) durchgehend eine zweite Lagerbreite (26) aufweisen.

2. Baureihe (50) von Planetengetrieben (10) nach Anspruch 1, **dadurch gekennzeichnet, dass** die Wälzlager (20) mit der ersten und zweiten Lagerbreite (24, 26) einen ersten Außendurchmesser (22) aufweisen.

3. Baureihe (50) von Planetengetrieben (10) nach Anspruch 1 oder 2, **dadurch gekennzeichnet, dass** zwischen zwei Wälzlagern (20) ein Abstandselement (35) angeordnet ist.

4. Baureihe (50) von Planetengetrieben (10) nach einem der Ansprüche 1 bis 3, **dadurch gekennzeichnet, dass** die Wälzlager (20) einreihig ausgebildet sind.

5. Baureihe (50) von Planetengetrieben (10) nach einem der Ansprüche 1 bis 4, **dadurch gekennzeichnet, dass** die zweite Lagerbreite (26) dem 1,1-fachen bis 1,5-fachen der ersten Lagerbreite (24) entspricht.

6. Baureihe (50) von Planetengetrieben (10) nach einem der Ansprüche 3 bis 5, **dadurch gekennzeichnet, dass** das Abstandselement (35) eine Axiallänge (37) aufweist, die dem 0,1-fachen bis 0,2-fachen der ersten Lagerbreite (24) entspricht.

7. Baureihe (50) von Planetengetrieben (10) nach einem der Ansprüche 2 bis 6, **dadurch gekennzeichnet, dass** die Baureihe (50) auch Teilbaureihen (51, 52, 53, 54) von Planetengetrieben (10) umfasst, die Wälzlager (20) aufweisen, die einen zweiten Außendurchmesser (23) aufweisen, die durchgehend eine dritte oder vierte Lagerbreite (27, 29) aufweisen.

8. Baureihe (50) von Planetengetrieben (10) nach Anspruch 7, **dadurch gekennzeichnet, dass** die Wälzlager (20) mit dem ersten Außendurchmesser (22) und die Wälzlager (20) mit dem zweiten Außendurchmesser (23) Wälzkörper (30) mit gleichem Wälzkörperdurchmesser (32) und/oder gleicher Wälzkörperlänge (36) aufweisen.

9. Baureihe (50) von Planetengetrieben (10) nach einem der Ansprüche 1 bis 7, **dadurch gekennzeichnet, dass** die Wälzlager (20) mit der ersten und der zweiten Lagerbreite (24, 26) Wälzkörper (30) mit gleichem Wälzkörperdurchmesser (32), die gleiche Anzahl an Wälzkörpern (30), und/oder den gleichen Teilkreisdurchmesser (34) aufweisen.

10. Baureihe (50) von Planetengetrieben (10) nach einem der Ansprüche 7 bis 9, **dadurch gekennzeichnet, dass** die erste Lagerbreite (24) der dritten Lagerbreite (27) und/oder die zweite Lagerbreite (26) der vierten Lagerbreite (29) entspricht.

11. Baureihe (50) von Planetengetrieben (10) nach einem der Ansprüche 3 bis 10, **dadurch gekennzeichnet, dass** zwischen den Wälzlagern (20) Abstandselemente (35) unterschiedlicher Axialbreite (37) angeordnet sind.

12. Antriebsstrang (67) für eine Windkraftanlage (60), umfassend eine Rotorwelle (64), die über ein Getriebe (66) drehmomentübertragend mit einem Generator (65) verbunden ist, **dadurch gekennzeichnet, dass** das Getriebe (66) als Planetengetriebe (10) aus einer Baureihe (50) nach einem der Ansprüche 1 bis 11 ausgebildet ist.

13. Windkraftanlage (60), umfassend einen Rotor (62), der drehbar an einer Gondel (61) angebracht ist und mit einem Antriebsstrang (67) verbunden ist, der in der Gondel (61) aufgenommen ist, **dadurch gekennzeichnet, dass** der Antriebsstrang (67) nach Anspruch 12 ausgebildet ist.

14. Industrie-Applikation (80), umfassend eine Antriebseinheit (82) und eine Abtriebseinheit (84), die über ein Getriebe (86) drehmomentübertragend miteinander verbunden sind, **dadurch gekennzeichnet, dass** das Getriebe (86) als Planetengetriebe (10) aus einer Baureihe (50) nach einem der Ansprüche 1 bis 11 ausgebildet ist.

15. Verwendung von Wälzlagern (20) zur drehbaren Lagerung von Planetenrädern (14) in einem Planetengetriebe (10), **dadurch gekennzeichnet, dass** die Wälzlager (20) einreihig ausgebildet sind, durchgehend den gleichen Außendurchmesser (22, 23) aufweisen und durchgehend die gleiche Lagerbreite (24, 26, 27, 29) aufweisen und je Planetenrad (14) mindestens zwei Wälzlager (20) kombiniert werden.
